# EUROPEAN PATENT SPECIFICATION

(11) **EP 4 036 891 B1**
(45) Date of publication and mention of the grant of the patent: **09.10.2024**
(21) Application number: 21154258.4
(22) Date of filing: 29.01.2021
(51) Int. Cl.: G08G 1/16, G08G 1/01, H04W 4/46, B60W 40/04, G06V 20/58

(54) **UNFORESEEN VEHICLE DRIVING SCENARIOS**
UNVORHERGESEHENE FAHRZEUGFAHRSZENARIEN
SCÉNARIOS DE CONDUITE DE VÉHICULE IMPRÉVUS

(43) Date of publication of application: 03.08.2022
(73) Proprietor: Zenseact AB, 417 56 Göteborg (SE)
(72) Inventor: FU, Junsheng, 449 35 Nödinge (SE); FEI, Zhennan, 417 55 Göteborg (SE); VAKILZADEH, Majid Khorsand, 431 66 Mölndal (SE)
(74) Representative: Valea AB

(56) References cited:
- EP-A1- 3 758 286
- US-A1- 2015 029 308
- US-A1- 2019 039 545
- US-A1- 2020 192 355

## Description

### TECHNICAL FIELD

The present disclosure relates to supporting assessment of unforeseen driving scenarios of a host vehicle.

### BACKGROUND

An increasing number of modern vehicles have advanced driver-assistance systems, ADAS, to increase vehicle safety and more generally road safety. ADAS - which for instance may be represented by adaptive cruise control, ACC, lane departure avoidance, collision avoidance system, forward collision warning, etc. - are electronic systems that may aid a vehicle driver while driving. To function as intended, ADAS may rely on inputs from multiple data sources, such as e.g. LIDARs, radars, ultrasonics, cameras, automotive imaging, image processing, computer vision, and/or in-car networking.

Moreover, in a not too distant future, autonomous or automated driving systems, AD systems, will to greater extent find their way into modern vehicles. An AD system is a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An AD system commonly combines a variety of sensors to perceive the vehicle's surroundings, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

Similar to manual vehicle driving, when a vehicle is under control of such an ADAS or AD system - and/or is transitioning between a manual drive mode and an ADAS or AD drive mode - unforeseen driving scenarios may occasionally occur. For instance, said vehicle may get involved in an unforeseen critical event e.g. a near accident or even an accident, and/or get involved in an unforeseen takeover behaviour to or from the ADAS or AD drive mode e.g. involving untimely takeover or unforeseen aborting of the ADAS or AD drive mode. Such unforeseen driving scenarios may be of interest to capture - for instance for post-analysis to identify a root cause for the unforeseen driving scenario - and it is known to reconstruct scenarios of critical events with support from input - e.g. videoclips - derived from image capturing devices, e.g. cameras, onboard the vehicle itself, or onboard potential surrounding vehicles in vicinity of said vehicle at the incident of the critical event.

However, although input from image capturing devices of surrounding vehicles may be valuable in scenario reconstruction, it may be challenging to gather such input in an adequate and/or efficient manner.

Relevant prior art is disclosed in US2019039545A1, which describes methods and systems for reconstructing a road event, e.g. vehicle collision. An occurrence of the event is detected by a server device based on sensor data of a first vehicle, which first data is stored for a first threshold amount of time prior to the event, during the occurrence of the event, and for a second threshold amount of time after the event and it is determining whether a responsive object is involved in or near the event. In response to determining that the responsive object is involved in or near the event, the first data is transmitted to the responsive object and second data is received from the responsive object. Finally, an event report is created by aggregating the first data and the second data.

### SUMMARY OF THE INVENTION

It is therefore an object of embodiments herein to provide an approach for in an improved and/or alternative manner support assessment of unforeseen driving scenarios of a host vehicle.

The object above is achieved by the subject-matter disclosed herein. Embodiments are set forth in the appended claims, in the following description and in the drawings.

The invention concerns a method as claimed in claim 1 and a corresponding scenario reconstruction system as claimed in claim 7. Equally, the invention relates to a computer program product as in claim 14 and a non-volatile computer readable storage medium as in claim 15. Advantageous embodiments may be configured according to any of the dependent claims 2-6 and 8-13.

Thereby, there is introduced an approach according to which input to a scenario reconstruction may be gathered in an adequate and/or efficient manner. That is, since there is continuously and/or intermittently stored timestamped sensor data comprising the host vehicle's geographical position and surroundings captured with support from one or more surrounding detecting sensors onboard the host vehicle, the world around the host vehicle may over time - e.g. as the host vehicle travels - be repeatedly captured and stored in real-time or essentially real-time, e.g. onboard the host vehicle, along with the host vehicle's current and potentially changing position. Accordingly, the host vehicle's current and/or ongoing geographical whereabouts and its surrounding world may continuously be logged, potentially along with the host vehicle's current and/or ongoing drive state indicating whether the host vehicle is in a manual drive mode or under control of the optional ADAS or AD system i.e. in an ADAS or AD drive mode. Furthermore, that is, since there is detected at a scenario time instance, involvement of the host vehicle in an unforeseen driving scenario, potentially involving one or more other objects, there is determined that the host vehicle at a timepoint referred to as a scenario time instance, is experiencing and/or has experienced an unforeseen driving scenario, such as a collision for instance with another object e.g. vehicle or such as an unforeseen takeover behaviour to or from an ADAS or AD drive mode. Moreover, that is, since there is derived from the timestamped sensor data subsets of sensor data, e.g. snapshots, pertinent plural separate timestamps prior - and potentially at and/or subsequent - the scenario time instance, there is obtained out of the stored timestamped sensor data comprising the host vehicle's position(s) and captured surroundings - for instance from the past exemplifying ten, thirty or sixty seconds - portions of sensor data, e.g. snapshots, respectively reflecting the host vehicle's position(s) and captured surroundings at respective two or more - at time intervals distributed - timepoints prior the scenario time instance, and potentially also thereafter. Accordingly, since there is derived - from the stored timestamped sensor data - subsets of sensor data for differing - at regular or irregular time intervals distributed - time instances, a capacity-efficient abbreviated version, overview and/or extract of the stored captured - likely changing - world around the host vehicle, may be provided. Furthermore, that is, since there is identified one or more surrounding detecting sensors-provided entities respectively present in the subsets pertinent at least two respective separate timestamps, respective entity - e.g. another vehicle - provided with at least one surrounding detecting sensor, which respective entity each is comprised in subsets of respective two or more separate timestamps, may be found. Thus, there may be identified entities which are deemed to support detection of surroundings and which further are deemed to during respective - at least partly overlapping or differing - time periods at least to some extent effective prior to the scenario time instance, have had the opportunity to potentially having detected and stored surroundings comprising the host vehicle during respective time period. Moreover, that is, since there is selected at least a first entity out of the identified entities fulfilling selection criteria, there is selected the one or more entities which comply with predeterminable selection criteria comprising conditions singling out entities deemed suitable as unforeseen driving scenario witnesses. Thus, merely entities considered preferred, suitable and/or good witness candidates are selected while the other identified entities may be deemed redundant. Accordingly, entities identified to be provided with surrounding detecting sensor(s) and present in subsets of at least two separate timestamps, may nonetheless be discarded should they not fulfil said selection criteria. Consequently, for instance for differing moments in time or periods of time leading up to the scenario time instance - and potentially further at and/or subsequent the scenario time instance - merely a few or even a single entity deemed suitable as unforeseen driving scenario witness(es), may be selected for respective moment in time and/or period of time, while the remaining identified entities may be discarded. Furthermore, that is, since there is communicated to the at least first selected entity, request data prompting the at least first selected entity to provide stored timestamped sensor data of its surroundings, the at least first selected entity is requested to upload recordings it has made - with support from its surrounding detecting sensor(s) - of the at least first selected entity's surroundings. Accordingly, since the at least first entity was identified to support detection of surroundings and which further was deemed to at least during a time period have had the opportunity to potentially having detected and stored surroundings comprising the host vehicle during said time period, the host vehicle - and potentially further the potential other object(s) - may be found in the requested stored timestamped sensor data of the at least first selected entity. Thus, said sensor data - e.g. video clips and/or object level data - may be requested for upload to be used as input for reconstruction of the unforeseen driving scenario, including scenarios leading up to - and potentially also following - said unforeseen driving scenario. This insinuates that entities no longer in near vicinity of the host vehicle at the time of the scenario time instance may be requested to provide their sensor data, as said sensor data - although not necessarily covering the unexpected driving scenario at the actual scenario instance - nonetheless may be essential in reconstruction of the scenario. Furthermore, since only entities fulfilling the selection criteria were selected, and the rest of the identified entities hence discarded e.g. for being deemed redundant, a request for uploading recorded sensor data is only communicated to entities considered preferred, suitable and/or good witness candidates. Thus, routinely requesting sensor data from all or essentially all surrounding detecting sensors-provided vehicles in vicinity of the host vehicle at the moment of - or around - the scenario time instance, as known in the art, which may translate into great amounts of and/or redundant sensor data being requested to be uploaded, may accordingly be avoided. Consequently, requesting uploading of potentially unnecessarily large sensor data quantities which in turn may lead to unnecessary data processing and/or data congestion, may subsequently similarly be avoided. Accordingly, with the introduced concept as described herein of selectively choosing which identified entities to request sensor data from and which to discard, input to scenario reconstruction is hence requested in an adequate and/or efficient manner.

For that reason, an approach is provided for in an improved and/or alternative manner support assessment of unforeseen driving scenarios of a host vehicle.

The technical features and corresponding advantages will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates schematic views of an exemplifying scenario reconstruction system according to embodiments of the disclosure in view of an exemplifying first driving and/or traffic situation leading up to a first unforeseen driving scenario;
**Fig. 2** illustrates schematic views of an exemplifying scenario reconstruction system according to embodiments of the disclosure in view of an exemplifying second driving and/or traffic situation leading up to a second unforeseen driving scenario;
**Fig. 3** is a schematic block diagram illustrating an exemplifying scenario reconstruction system according to embodiments of the disclosure; and
**Fig. 4** is a flowchart depicting an exemplifying method performed by a scenario reconstruction system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting assessment of unforeseen driving scenarios of a host vehicle, there will be disclosed an approach according to which input to a scenario reconstruction may be gathered in an adequate and/or efficient manner.

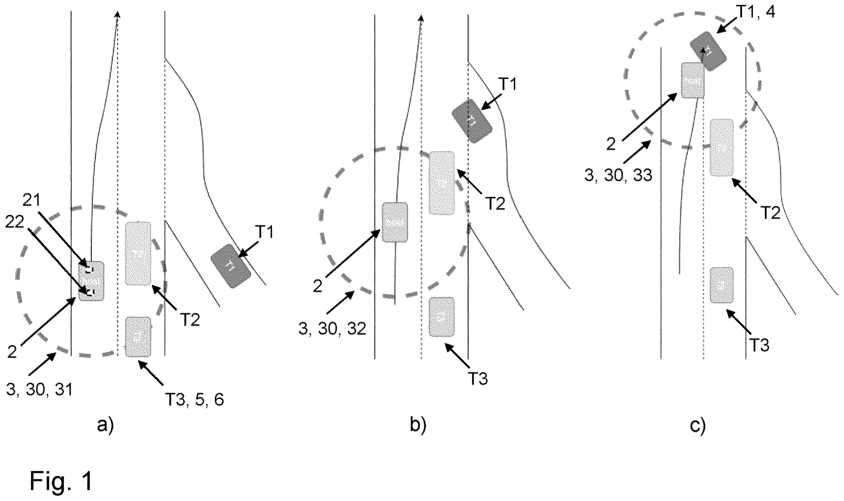

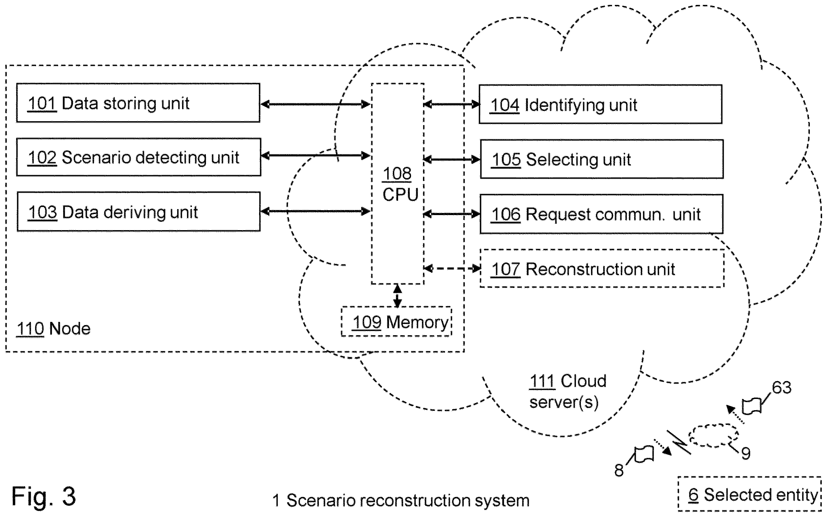

Referring now to the figures, there is depicted in **Figs. 1-2** respective schematic views of an exemplifying **scenario reconstruction system 1** according to embodiments of the disclosure in view of exemplifying driving and/or traffic situations leading up to unforeseen driving scenarios, whereas there in **Fig. 3** is depicted a schematic block diagram illustrating such an exemplifying scenario reconstruction system 1 according to embodiments of the disclosure. The scenario reconstruction system 1 is adapted for supporting assessment of unforeseen driving scenarios of a **host vehicle 2.** The exemplifying host vehicle 2 may be represented by any arbitrary - e.g. known - manned or unmanned vehicle, for instance an engine-propelled or electrically-powered vehicle such as a car, truck, lorry, van, bus and/or tractor. Moreover, the term "host vehicle" may refer to merely "vehicle", and further to "autonomous and/or at least partly autonomous vehicle", "driverless and/or at least partly driverless vehicle", and/or "self-driving and/or at least partly self-driving vehicle". Said host vehicle 2 may accordingly comprise and/or have onboard an advanced driver-assistance system, ADAS, or automated driving, AD, **system 21.** Said ADAS or AD system 21 may refer to any arbitrary ADAS and/or AD system e.g. known in the art and/or yet to be developed. Moreover, the host vehicle 2 and/or the ADAS or AD system 21 may comprise, be provided with and/or have onboard an optional perception system (not shown) and/or similar system and/or functionality adapted to estimate surroundings of the host vehicle 2, and subsequently adapted to estimate world views of the surroundings e.g. with support from a - e.g. commonly known - digital map such as a high definition, HD, map, and/or an equivalent and/or successor thereof. Such an exemplifying perception system or similar system may refer to any commonly known system and/or functionality, e.g. comprised in one or more electronic control modules, ECUs, and/or nodes of the host vehicle 2 and/or the ADAS or AD system 21, adapted and/or configured to interpret sensory information - relevant for driving of the host vehicle 2 - to identify e.g. objects, obstacles, vehicle lanes, relevant signage, appropriate navigation paths etc. The exemplifying perception system or similar system - which may be adapted to support e.g. sensor fusion, tracking, localization etc. - may thus be adapted to rely on sensory information. Such exemplifying sensory information may for instance be derived from one or more - e.g. commonly known - sensors comprised in and/or provided onboard the host vehicle 2 adapted to sense and/or perceive the host vehicle's 2 whereabouts and/or surroundings, for instance represented by one or a combination of one or more of surrounding detecting sensors, such as image capturing devices e.g. cameras, radar, lidar, ultrasonics etc., and/or a positioning system, odometer, inertial measurement units etc.

The phrase "scenario reconstruction system" may refer to "scene reconstruction system" and/or "scenario assessment system", and according to an example further to "incident reconstruction system". The phrase "for supporting assessment", on the other hand, may refer to "for supporting reconstruction" and/or "for selecting and/or gathering sensor data for reconstruction", whereas "assessment of unforeseen driving scenarios" may refer to "assessment of unwanted and/or uncertain driving scenarios", and according to an example further to "assessment of critical driving scenarios". Moreover, "unforeseen driving scenarios" may refer to "unexpected driving scenarios", "unforeseen driving events" and/or "unplanned, unwanted and/or uncertain driving scenarios", and according to an example further to "unforeseen driving incidents", whereas "unforeseen driving scenario of a host vehicle" may refer to "unforeseen driving scenario involving a host vehicle".

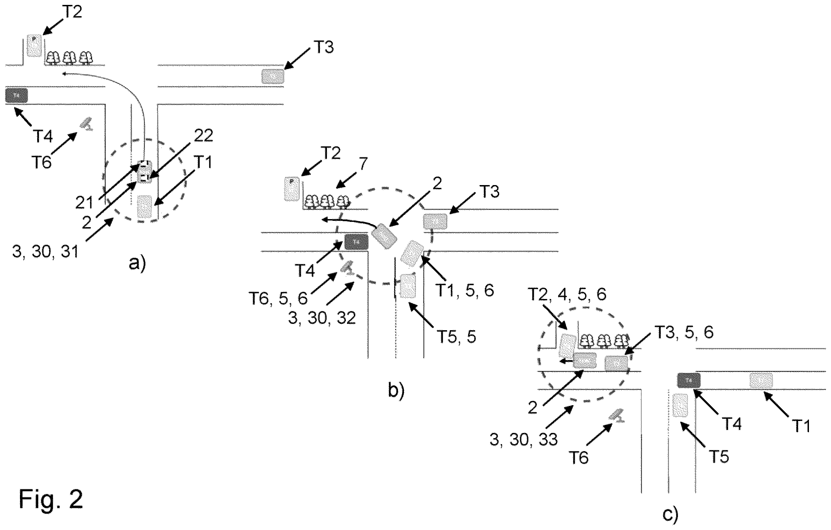

Further depicted in Figs. 1-2 respectively, as part of a respective exemplifying traffic environment of the host vehicle 2, is a respective exemplifying **first vehicle T1, second vehicle T2,** and **third vehicle T3.** In Fig. 2 is additionally a respective exemplifying **fourth vehicle T4** and **fifth vehicle T5** illustrated, along with an exemplifying piece of **infrastructure T6** provided with at least a first surrounding detecting sensor such as a surveillance camera arrangement.

As depicted in exemplifying manners in Figs. 1a, 1b, 1c, and Figs. 2a, 2b, 2c, respectively, the scenario reconstruction system 1 is - e.g. by means of a **data storing unit 101** - adapted and/or configured for continuously and/or intermittently storing timestamped **sensor data 3** comprising the host vehicle's 2 geographical position and surroundings captured with support from one or more **surrounding detecting sensors 22** onboard the host vehicle 2. Thereby, the world around the host vehicle 2 may over time - e.g. as the host vehicle travels 2 - be repeatedly captured and stored in real-time or essentially real-time, e.g. onboard the host vehicle 2, along with the host vehicle's 2 current and potentially changing position. Accordingly, the host vehicle's 2 current and/or ongoing geographical whereabouts and its surrounding world may continuously be logged, potentially along with the host vehicle's 2 current and/or ongoing drive state indicating whether the host vehicle 2 is in a manual drive mode or under control of the optional ADAS or AD system 21 i.e. in an ADAS or AD drive mode.

The timestamped sensor data 3 may be stored in any arbitrary - e.g. known - manner, such as in one or more memories and/or data buffers. Such an exemplifying at least first memory and/or data buffer may for instance be of predeterminable size, capacity and/or dimensions, such as continuously and/or intermittently buffering the past e.g. ten, thirty or sixty seconds of the sensor data 3, with older sensor data 3 being overwritten by newer and/or updated sensor data 3. Moreover, the timestamped sensor data 3 may further be of any arbitrary feasible size and/or format, such as in addition to the host vehicle's 2 position(s) - derived with support from a e.g. known positioning system - being indicated in any arbitrary manner e.g. represented by GPS coordinates and/or indicated in relation to a digital map such as e.g. an HD map, being represented by e.g. image data such as images and/or video and/or represented by e.g. object data. The one or more surrounding detecting sensors 22 - which may be comprised in and/or be provided onboard the host vehicle 2 and distributed in any arbitrary feasible manner - may thus be represented by any arbitrary feasible sensors, functionality and/or systems adapted to capture surrounding of the host vehicle 2, for instance one or more image capturing devices such as cameras, and/or radar, lidar, ultrasonics etc. Moreover, the surrounding detecting sensor(s) 22 may potentially be provided in association with the optional perception system or similar system and/or the ADAS or AD system 21 discussed above. Furthermore, the surrounding detecting sensor(s) 22 may cover any arbitrary portion of vehicle surroundings, in any arbitrary direction from the host vehicle 2, for instance covering e.g. at least 90 degrees, at least 180 degrees or essentially 360 degrees of the surroundings.

The phrase "storing [...] timestamped sensor data" may refer to "logging, collecting and/or gathering [...] timestamped sensor data", "storing digitally and/or electronically [...] timestamped sensor data" and/or "storing in on or more memories and/or data buffers [...] timestamped sensor data", and according to an example further to "storing at said host vehicle [...] timestamped sensor data", whereas "timestamped sensor data" may refer to "time-tagged and/or time-attributed sensor data". Moreover, "sensor data" may refer to "sensor input", "derived and/or gathered sensor data" and/or "current or essentially current status data", whereas "sensor data comprising said host vehicle's geographical position and surroundings captured with support from one or more surrounding detecting sensors onboard said host vehicle" may refer to "sensor data comprising said host vehicle's geographical position captured with support from a positioning system and surroundings captured with support from one or more surrounding detecting sensors onboard said host vehicle" and/or "sensor data comprising said host vehicle's geographical position and surroundings captured continuously and/or intermittently with support from one or more surrounding detecting sensors onboard said host vehicle". Moreover, according to an example, "sensor data comprising said host vehicle's geographical position and surroundings" may refer to "sensor data comprising said host vehicle's geographical position, drive state and surroundings". The phrase "with support from one or more surrounding detecting sensors", on the other hand, may refer to "utilizing and/or by means of one or more surrounding detecting sensors", whereas "surrounding detecting sensors onboard said host vehicle" may refer to "surrounding detecting comprised in said host vehicle and/or provided or situated onboard said host vehicle".

As depicted in exemplifying manners in Figs. 1c and 2c, respectively, the scenario reconstruction system 1 is - e.g. by means of a **scenario detecting unit 102** - adapted and/or configured for detecting at a scenario time instance, involvement of the host vehicle 2 in an unforeseen driving scenario, potentially involving one or more **other objects 4.** Thereby, there is determined that the host vehicle 2 at a timepoint referred to as a scenario time instance, is experiencing and/or has experienced an unforeseen driving scenario, in Fig. 1c exemplified by a collision with an other object 4 represented by the first vehicle T1 and in Fig. 2c exemplified by a collision with an other object 4 represented by the second vehicle T2.

The one or more other objects 4 may be represented by any static or dynamic objects and/or other road users, e.g. other vehicles, with which the host vehicle 2 potentially accidentally may collide or nearly collide. The scenario time instance, on the other hand, may refer to any arbitrary point in time at which - or essentially at which - the unforeseen driving scenario, e.g. collision and/or unforeseen takeover behaviour to or from an ADAS or AD drive mode, occurred and/or was detected. Moreover, the unforeseen driving scenario may be represented by any driving event, situation and/or incident involving the host vehicle 2 deemed unforeseen, unexpected, unplanned, unwanted and/or uncertain, or potentially deemed critical. The phrase "detecting [...] involvement" may refer to "learning, determining and/or determining based on a received signal and/or message [...] involvement", and according to an example further to "detecting at said host vehicle [...] involvement". The phrase "at a scenario time instance", on the other hand, may refer to "at a current or essentially current scenario time instance", "at a scenario timepoint", "at an event time instance", and according to an example further to "at an incident time instance". Moreover, "involvement of said host vehicle in an unforeseen driving scenario" may refer to "occurrence of said host vehicle being involved in and/or experiencing an unforeseen driving scenario", whereas "unforeseen driving scenario", as previously indicated, may refer to "unexpected, unplanned, unwanted and/or uncertain driving scenario" and/or "unforeseen driving event", and according to an example further to "unforeseen driving incident". The phrase "potentially involving one or more other objects" may refer to "optionally involving one or more other objects", "potentially with one or more other objects" and/or "potentially involving one or more other static or dynamic objects".

Detecting involvement of the host vehicle 2 in an unforeseen driving scenario may be accomplished in any arbitrary feasible - e.g. known - manner, for instance with support from sensor readings such as readings of crash sensor(s), airbag(s) deployment, harsh braking and/or steering etc., and/or with support from other driving behaviour indicators such as criticality indicators and/or key performance indicators, KPIs, for instance exemplifying indicators and/or indications revealing harsh - e.g. unmotivated - braking and/or steering, off-lane-steering, time-to-collision, jerky driving, threat measures e.g. involving Steering Threat Number and/or Brake Threat Number, untimely and/or unplanned activation/deactivation of the optional ADAS or AD system 21, etc.

Thus, optionally, the detecting involvement of the host vehicle 2 in an unforeseen driving scenario may comprise - and/or said scenario detecting unit 102 may be adapted and/or configured for- detecting, from establishment of accident criteria being fulfilled, involvement of the host vehicle 2 in an unforeseen driving scenario comprising an accident. Thereby, the unforeseen driving scenario may be represented by an accident - e.g. a collision such as with an other object 4 - which is determined and/or deemed to have occurred following upon fulfilment of predeterminable accident criteria. The accident criteria may be represented by any feasible criteria stipulating one or more conditions for establishment of involvement of the host vehicle 2 in an accident, such as one or more conditions and/or thresholds identified and/or defined as - when fulfilled and/or e.g. exceeded - indicating occurrence of an accident. The accident criteria may accordingly for instance comprise a condition for an airbag of the host vehicle 2 being deployed., which when fulfilled may translate into the host vehicle 2 being deemed to be - and/or have been - involved in an accident.

Additionally or alternatively, optionally, the detecting involvement of the host vehicle 2 in an unforeseen driving scenario may comprise - and/or said scenario detecting unit 102 may be adapted and/or configured for- detecting, from establishment of critical event criteria being fulfilled, involvement of the host vehicle 2 in an unforeseen driving scenario comprising a critical event, for instance a near accident. Thereby, the unforeseen driving scenario may be represented by a critical event such as a near accident - e.g. a near collision such as with an other object 4 - which is determined and/or deemed to have occurred following upon fulfilment of predeterminable critical event criteria. The critical event criteria may be represented by any feasible criteria stipulating one or more conditions for establishment of involvement of the host vehicle 2 in a critical event, such as one or more thresholds - e.g. deviation thresholds in view of KPIs - identified and/or defined as - when e.g. exceeded - indicating occurrence of a critical event. The critical event criteria may accordingly for instance comprise threshold levels for a - to the host vehicle 2 applied - braking force and/or braking torque, steering force and/or steering angle etc., and/or a threshold level for time-to-collision such as a maximum TTC time threshold e.g. exemplified by 0.5 seconds, which when fulfilled and/or e.g. exceeded may translate into the host vehicle 2 being deemed to be - and/or have been - involved in a critical event.

Furthermore, optionally, additionally or alternatively, the detecting involvement of the host vehicle 2 in an unforeseen driving scenario may comprise - and/or said scenario detecting unit 102 may be adapted and/or configured for- detecting, from establishment of unforeseen takeover behaviour criteria being fulfilled, involvement of the host vehicle 2 in an unforeseen driving scenario comprising an unforeseen takeover behaviour to or from an ADAS or AD system 21 drive mode. Thereby, the unforeseen driving scenario may be represented by an unforeseen takeover behaviour to or from an ADAS or AD drive mode - e.g. an untimely takeover and/or unforeseen takeover - which is determined and/or deemed to have occurred following upon fulfilment of predeterminable unforeseen takeover behaviour criteria. The unforeseen takeover behaviour criteria may be represented by any feasible criteria stipulating one or more conditions for establishment of involvement of the host vehicle 2 in an unforeseen takeover behaviour, such as one or more conditions and/or thresholds identified and/or defined as - when fulfilled and/or e.g. exceeded - indicating occurrence of an unforeseen takeover behaviour. The unforeseen takeover behaviour criteria may accordingly for instance stipulate under what conditions a takeover is considered untimely and/or under what conditions a takeover is considered unforeseen, unexpectedly aborted, unplanned and/or unwanted, which when fulfilled may translate into the host vehicle 2 being deemed to be - and/or have been - involved in an unforeseen takeover behaviour.

As illustrated in exemplifying manners in Figs. 1 and 2, respectively, the scenario reconstruction system 1 is further - e.g. by means of a **data deriving unit 103** - adapted and/or configured for deriving from the timestamped sensor data 3, **subsets 30** of sensor data - e.g. snapshots - pertinent plural separate timestamps prior - and potentially at and/or subsequent - the scenario time instance. Thereby, out of the stored timestamped sensor data 3 comprising the host vehicle's 2 position(s) and captured surroundings - for instance from the past exemplifying ten, thirty or sixty seconds - there is obtained portions 30 of sensor data 3 - e.g. snapshots - respectively reflecting the host vehicle's 2 position(s) and captured surroundings at respective two or more - at time intervals distributed - timepoints prior the scenario time instance, and potentially also thereafter. Accordingly, since there is derived - from the stored timestamped sensor data 3 - subsets 30 of sensor data for differing - at regular or irregular time intervals distributed - time instances prior the occurrence of the unforeseen driving scenario, and potentially also thereafter, a capacity-efficient abbreviated version, overview and/or extract of the stored captured - likely changing - world around the host vehicle 2, may be provided.

Figs. 1a and 2a depict in an exemplifying manner a respective **first subset 31** of the timestamped sensor data 3 effective for a first timestamp, Figs. 1b and 2b depict in an exemplifying manner a respective **subsequent subset 32** of the timestamped sensor data 3 effective for a subsequent timestamp, whereas Figs. 1c and 2c depict in an exemplifying manner a respective **scenario time instance subset 33** of the timestamped sensor data 3 effective for a timestamp essentially coinciding with the scenario time instance.

Respective subset 30 of sensor data may be represented by any feasible portion out of the stored timestamped sensor data 3, such as respective snapshots of the captured world around the host vehicle 2, effective at - and/or essentially at and/or around - the corresponding timestamp. The timestamps corresponding to the derived respective subsets 30, on the other hand, may be distributed in any feasible manner separating said timestamps, for instance to a predeterminable extent. The separate timestamps may accordingly by distributed at regular or irregular time intervals, which time intervals may be predeterminable and further vary, and for instance be greater than e.g. half a second, two seconds and/or five seconds. The number of separate timestamps for which subsets 30 are derived may thus be represented by any feasible quantity, for instance range from just a few up to tens or even hundreds of separate timestamps. At least some, a majority and/or essentially all of said separate timestamps may be effective prior the scenario time instance, i.e. prior involvement of the host vehicle 2 in the unforeseen driving scenario. Optionally, one or more of said separate timestamps may potentially be effective at or essentially at the scenario time instance, i.e. around the moment of involvement of the host vehicle 2 in the unforeseen driving scenario, or thereafter.

The phrase "deriving [...] sensor data" may refer to "filtering out, selecting, obtaining, retrieving, gathering and/or providing [...] sensor data", and according to an example further to "deriving at said host vehicle [...] sensor data". Moreover, "subsets of sensor data" may refer to "respective subsets of sensor data" and/or "a respective subset or portion of sensor data", whereas" deriving from said timestamped sensor data subsets of sensor data" may refer to "deriving subsets out of said timestamped sensor data". The phrase "e.g. snapshots", on the other hand, may refer to "comprising snapshots" and/or "e.g. a respective snapshot". Furthermore, "subsets of sensor data [...] pertinent plural separate timestamps" may refer to "subsets of sensor data [...] corresponding to, valid for, reflective of and of effective for plural timestamps", and further to "subsets of sensor data [...] pertinent plural - at regular or irregular time intervals distributed - separate timestamps" and/or "subsets of sensor data [...] pertinent plural - to a predeterminable extent distributed - separate timestamps". Moreover, "timestamps" may refer to "time instances and/or timepoints" and according to an example further to "past timestamps", whereas "plural separate timestamps" may refer to "two or more separate time stamps". The phrase "timestamps prior [...] said scenario time instance", on the other hand, may refer to "timestamps effective prior [...] said scenario time instance", whereas "timestamps prior - and potentially at and/or subsequent - said scenario time instance" may refer to "timestamps prior- and potentially essentially at and/or subsequent - said scenario time instance".

As depicted in exemplifying manners in Figs. 1 and 2, respectively, the scenario reconstruction system 1 is further - e.g. by means of an **identifying unit 104** - adapted and/or configured for identifying one or more surrounding detecting sensors-provided **entities 5** respectively present in the subsets 30 pertinent at least two respective separate timestamps. Thereby, respective entity 5 - e.g. another vehicle - provided with at least one surrounding detecting sensor, which respective entity 5 each is comprised in subsets 30 of respective two or more separate timestamps, may be pinpointed. Thus, there may be identified entities 5 which are deemed to support detection of surroundings and which further are deemed to during respective - at least partly overlapping or differing - time periods at least to some extent effective prior to the scenario time instance, have had the opportunity to potentially having detected and stored surroundings comprising the host vehicle 2 during respective time period.

In exemplifying Fig. 1, the first vehicle T1 and the second vehicle T2 are not part of the identified entities 5, in that said vehicles T1, T2 are exemplified as not being provided with surrounding detecting sensors. The third vehicle T3, however, is depicted to represent an identified entity 5 in that said third vehicle T3 is present in the first subset 31 for the first timestamp - and in at least one additional subset 30 for a separate timestamp (not shown) - and further deemed to be provided with surrounding detecting sensor(s).

In exemplifying Fig. 2, on the other hand, the first vehicle T1 is depicted to represent an identified entity 5 in that said first vehicle T1 is present in the first subset 31 for the first timestamp - and in at least the subsequent subset 32 for the subsequent timestamp - and further deemed to be provided with surrounding detecting sensor(s). Similarly, the third vehicle T3, the fifth vehicle T5 as well as the piece of infrastructure T6 of Fig. 2 are depicted to represent a respective identified entity 5 in that T3, T5 and T6 respectively are present in the second subset 32 for the subsequent timestamp - and in at least one additional subset 30 for a separate timestamp (not shown) - and further deemed to be provided with surrounding detecting sensor(s). The fourth vehicle T4 of Fig. 2, however, is not part of the identified entities 5, in that vehicle T4 is exemplified as not being provided with surrounding detecting sensors. Moreover, the second vehicle T2 of Fig. 2 is depicted to represent an identified entity 5 in that said second vehicle T2 is present in the scenario time instance subset 33 for the timestamp essentially coinciding with the scenario time instance - and in at least one additional subset 30 for a separate timestamp (not shown) - and further deemed to be provided with surrounding detecting sensor(s).

Identifying at least a first surrounding detecting sensors-provided entity 5 present in at least two of the subsets 30 effective for separate timestamps, may for instance take place - at least to some extent - at a commonly known at least a first off-board **cloud** server **111** adapted to communicate with vehicles including the host vehicle 2, such as e.g. a cloud and/or automotive cloud, cloud network adapted for cloud-based storage and/or back-end system. Furthermore, an entity described herein may be represented by any arbitrary dynamic or stationary entity, for instance another vehicle positioned in e.g. a same, adjacent, oncoming or crossing lane of the host vehicle 2 and/or a piece of infrastructure such as a building, gas station, bridge etc for instance provided with a surveillance camera arrangement. Moreover, establishing that there are entities comprised in the subsets 30, further establishing whether any of said entities are provided with one or more surrounding detecting sensors, and potentially also establishing respective field of view of the identified entities 5, may be accomplished in any feasible - e.g. known - manner, such as with support from object detection, entity identity detection, identity lookup-table(s), etc. Furthermore, the surrounding detecting sensor(s) of an identified entity 5 may similarly to the surrounding detecting sensors of the host vehicle 2, be represented by any arbitrary feasible sensors, functionality and/or systems adapted to capture said entity's 5 surroundings, for instance one or more image capturing devices such as cameras, and/or radar, lidar, ultrasonics etc.

The phrase "identifying [...] entities" may refer to "pinpointing and/or determining [...] entities", and according to an example further to "identifying - at least to some extent - at a cloud server [...] entities" and/or "identifying - at least to some extent - at a cloud server with support from said host vehicle [...] entities". Moreover, "surrounding detecting sensors-provided entities" may refer to "entities respectively provided with at least a first surrounding detecting sensor", and further to "surrounding detecting sensors-provided entities considered witness candidates". The phrase "entities respectively present in said subsets", on the other hand, may refer to "entities respectively comprised in said subsets", and according to an example further to "entities respectively present in said subsets obtained from said host vehicle". Furthermore, "pertinent at least two respective separate timestamps" may refer to "for at least two respective separate timestamps". According to an example, the phrase "identifying one or more surrounding detecting sensors-provided entities respectively present in said subsets pertinent at least two respective separate timestamps" may refer to "identifying one or more surrounding detecting sensors-provided entities respectively present in said subsets pertinent at least two respective separate timestamps, a respective location and/or pose of respective entity relative respective position of said host vehicle - and/or potentially said one or more other objects - rendering a viewing angle deemed to at least partly and/or to a predeterminable extent cover said position" and/or "identifying one or more surrounding detecting sensors-provided entities respectively present in said subsets pertinent at least two respective separate timestamps, deemed to have respective field of views at least partly and/or to a predeterminable extent covering respective position of said host vehicle and/or potentially said one or more other objects".

As illustrated in exemplifying manners in Figs. 1 and 2, respectively, the scenario reconstruction system 1 is further - e.g. by means of a **selecting unit 105** - adapted and/or configured for selecting at least a first **entity** 6 out of the identified entities 5 fulfilling selection criteria. Thereby, there is selected the one or more entities 6 which comply with predeterminable selection criteria comprising conditions singling out entities deemed suitable as unforeseen driving scenario witnesses. Thus, merely entities 6 considered preferred, suitable and/or good witness candidates are selected while the other identified entities 5 may be deemed redundant, Accordingly, entities 5 identified to be provided with surrounding detecting sensor(s) and present in subsets 30 of at least two separate timestamps, may nonetheless be discarded should they not fulfil said selection criteria. Consequently, for instance for differing moments in time or time periods leading up to the scenario time instance - and potentially further at and/or subsequent the scenario time instance - merely a few or even a single entity 6 deemed suitable as unforeseen driving scenario witness(es), may be selected for respective moment in time and/or period of time, while the remaining identified entities 5 may be discarded.

Furthermore, optionally, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria to greater extent as compared to other entities of the identified entities 5. Thereby, entities 5 identified to be provided with surrounding detecting sensor(s) and present in subsets 30 of at least two separate timestamps, and further fulfilling the selection criteria, may nonetheless be discarded should there be at least a first other entity 6 outperforming said entities 5 in view of the selection criteria. Thus, in this case, where one or more entities 6 accordingly may be prioritized higher than other entities 5, merely entities 6 considered most preferred, best suited and/or best witness candidates may be selected while the other identified entities 5 are deemed redundant, whereby the number of selected entities 6 hence may be kept to a minimum. For instance, should there be two or more identified entities 5 in the subsets 30 which demonstrate similar conditions - such as in the subsets 30 having similar geographical positions and/or respective positions within a predeterminable distance from one another and/or being present in a same predeterminable geographical region e.g. in relation to the host vehicle's 2 position such as within a predeterminable sector of a circle origin from the host vehicle's 2 position - then a single entity 6 or merely a few entities 6 out of said entities 5 - which to greater extent fulfil the selection criteria - may be selected i.e. prioritized. The phrase "fulfilling selection criteria to greater extent as compared to other entities of said identified entities" may according to an example refer to "fulfilling selection criteria and additionally further selection criteria".

Selecting at least a first entity 6 out of the identified entities 5 may for instance take place - at least to some extent - at said at least first cloud server 111. The selection criteria, on the other hand, may vary and/or be dynamic, and thus e.g. change with the situation at hand and/or in view of the identified entities 5, for instance in comparison with one another. For instance, the selection criteria may vary with number of identified entities 5, such as the more identified entities 5 the stricter the selection criteria in order to keep down the number of selected entities 6, for instance to a minimum. Similarly, for instance, the selection criteria may vary in consideration of positions and/or poses of identified entities 5, and/or vary with reliability in identifying of the identified entities 5, such as reliability in establishment of that there are entities comprised in the subsets 30, in establishment of whether any of said entities are provided with one or more surrounding detecting sensors, and potentially in establishment of respective field of view of the identified entities 5. The phrase "selecting at least a first entity" may refer to "filtering out, singling out, identifying, pinpointing and/or determining at least a first entity", and according to an example further to "selecting at said cloud server at least a first entity". The phrase "fulfilling selection criteria", on the other hand, may refer to "fulfilling selection criteria comprising one or more conditions and/or thresholds". Moreover, "selection criteria" may refer to "witness selection criteria", "predeterminable selection criteria" and/or "preferred candidates criteria", and according to an example further to "selection criteria stipulating conditions for selecting suitable witness candidates" and/or "selection criteria comprising conditions singling out entities deemed suitable as unforeseen driving scenario witnesses".

The selection criteria may be represented by any feasible criteria stipulating under what circumstances the identified entities 5 should be selected or otherwise discarded. The selection criteria may accordingly comprise one or more conditions and/or thresholds defined as - when fulfilled and/or e.g. exceeded - indicating that the entity 6 is a suitable witness candidate.

Thus, optionally, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria relating to number of timestamps at which the at least first entity 6 is present in the subsets 30. Thereby, there may be taken into consideration in selection of at least a first entity 6, at how many timestamps - which may be an indication of time duration - respective identified entity 5 is present in the subsets 30 and hence had the opportunity to potentially detect and store surroundings comprising the host vehicle 2. Accordingly, entities 6 for instance demonstrating presence in the subsets 30 for a great enough number of timestamps exceeding a predeterminable quantity stipulated by the selection criteria - and/or for instance demonstrating greater number of timestamps as compared to one or more other identified entities 5 - may be prioritized and hence selected. The phrase "fulfilling selection criteria relating to number of timestamps at which said at least first entity is present in said subsets" may refer to "fulfilling selection criteria relating to number of timestamps at which said at least first entity is present in said subsets as compared to one or more other entities of said identified entities".

Additionally or alternatively, optionally, the selecting of at least first entity 6 out of the identified entities 5 fulfilling selection criteria may comprise - and/or said selecting unit 105 may be adapted and/or configured for - selecting at least a first entity 6 out of the identified entities 5 fulfilling selection criteria relating to time occurrence of timestamps at which the at least first entity 6 is present in the subsets 30. Thereby, there may be taken into consideration in selection of at least a first entity 6, at which moments in time - for instance in relation to the scenario time instance - respective identified entity 5 is present in the subsets 30 and hence had the opportunity to potentially detect and store surroundings comprising the host vehicle 2. Accordingly, entities 6 for instance demonstrating presence in the subsets 30 at a time occurrence occurring at a predeterminable moment in time and/or within a predeterminable time range stipulated by the selection criteria - and/or for instance demonstrating presence in the subsets 30 at a time occurrence occurring closer in time to a predeterminable moment in time as compared to one or more other identified entities 5 - may be prioritized and hence selected. The phrase "fulfilling selection criteria relating to time occurrence of timestamps at which said at least first entity is present in said subsets" may refer to "fulfilling selection criteria relating to time occurrence of timestamps at which said at least first entity is present in said subsets as compared to one or more other entities of said identified entities".

Furthermore, additionally or alternatively, optionally, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria relating to positions of the at least first entity 6 relative positions of the host vehicle 2 and/or the potential one or more other objects 4 in the subsets 30. Thereby, there may be taken into consideration in selection of at least a first entity 6, positions of respective identified entity 5 - which may be an indication of distance(s) from and/or direction(s) toward - the host vehicle 2 and/or the potential other object(s) 4 in the subsets 30, from which positions respective entity 5 hence had the opportunity to potentially detect and store surroundings comprising the host vehicle 2 and/or the potential other object(s) 4. Accordingly, entities 6 for instance positioned at and/or within predeterminable geographical areas, distances and/or directions stipulated by the selection criteria - and/or for instance at shorter distances and/or preferred directions from the host vehicle's 2 and/or the potential other object(s)' 4 positions as compared to one or more other identified entities 5 - may be prioritized and hence selected. The phrase "fulfilling selection criteria relating to positions of said at least first entity relative positions of said host vehicle and/or said potential one or more other objects in said subsets" may refer to "fulfilling selection criteria relating to positions of said at least first entity relative positions of said host vehicle and/or said potential one or more other objects in said subsets as compared to one or more other entities of said identified entities".

Moreover, optionally, additionally or alternatively, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria relating to viewing angle from the at least first entity 6 relative positions of the host vehicle 2 and/or the potential one or more other objects 4 in the subsets 30. Thereby, there may be taken into consideration in selection of at least a first entity 6, viewing angles of respective identified entity 5 - which for instance may be derived from established poses of respective identified entity 5 - in relation to the host vehicle 2 and/or the potential other object(s) 4 in the subsets 30, with which viewing angles respective entity 5 hence had the opportunity to potentially detect and store surroundings comprising the host vehicle 2 and/or the potential other object(s) 4. Accordingly, entities 6 with viewing angles for instance giving a coverage of the host vehicle's and/or the potential other object(s)' 4 position(s) exceeding a predeterminable minimum coverage requirement stipulated by the selection criteria - and/or for instance to greater extent covering positions of the host vehicle 2 and/or the potential other object(s) 4 as compared to one or more other identified entities 5 - may be prioritized and hence selected. The phrase "viewing angles form said at least first entity" may refer to "viewing angle from the one or more surrounding detecting sensors onboard said at least first entity", whereas "fulfilling selection criteria relating to viewing angles from said at least first entity relative positions of said host vehicle and/or said potential one or more other objects in said subsets" may refer to "fulfilling selection criteria relating to viewing angles from said at least first entity relative positions of said host vehicle and/or said potential one or more other objects in said subsets as compared to one or more other entities of said identified entities".

Furthermore, additionally or alternatively, optionally, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria relating to the at least first entity 6 comprising and/or being comprised in the one or more other objects 4 potentially involved in the unforeseen driving scenario. Thereby, there may be taken into consideration in selection of at least a first entity 6, whether any of the identified entities 5 is the one or more other objects 4 - in Fig. 1 represented by the first entity T1 and in Fig. 2 represented by the second entity T2 - potentially involved in the unforeseen driving scenario, and which hence had the opportunity to potentially detect and store surroundings comprising the host vehicle 2 and subsequently the unforeseen driving scenario at and or around the scenario time instance. Accordingly, in this case, an entity 6 deemed to constitute the potential one or more other objects 4, may be prioritized and hence selected.

Moreover, optionally, additionally or alternatively, the selecting of at least first entity 6 out of the identified entities 5 fulfilling selection criteria may comprise - and/or said selecting unit 105 may be adapted and/or configured for- selecting at least a first entity 6 out of the identified entities 5 fulfilling selection criteria relating to characteristics of the one or more surrounding detecting sensors of the at least first entity 6. Thereby, there may be taken into consideration in selection of at least a first entity 6, characteristics of respective identified entity's 5 surrounding detecting sensor(s), such as type of sensors, performance qualities etc. - derivable for instance from the subsets 30 e.g. with support from lookup tables - with which characteristics respective entity 5 hence had the opportunity to potentially detect and store surroundings comprising the host vehicle 2 and/or the potential other vehicle(s) 4. Accordingly, entities 6 with characteristics for instance complying with predeterminable characteristics stipulated by the selection criteria, may be prioritized and hence selected.

In exemplifying Fig. 1, the third vehicle T3 naturally represent the selected entity 6, in being the only identified entity 5. In exemplifying Fig. 2, on the other hand, the first vehicle T1 represents a selected entity 6, for being present in the surroundings of the host vehicle 2 during a time period prior the scenario time instance. Similarly, the piece of infrastructure T6 of Fig. 2 with the exemplifying surveillance camera T6 represents a selected entity 6, for providing the best viewing angle of the other object(s) 4 - here exemplified by the second vehicle T2 - involved in the unforeseen driving scenario. It may be noted that the second vehicle T2 in Fig. 2 is exemplified to be obstructed from being detectable by the host vehicle 2 for a time duration prior to the scenario time instance due to **obstructing elements 7,** here represented by trees. Furthermore, the third vehicle T3 of Fig. 2 represents a selected entity 6, for being present in the surroundings of the host vehicle 2 during a time period covering the scenario time instance. Similarly, the second vehicle T2 of Fig. 2 represents a selected entity 6, for constituting the other object(s) 4 involved in the unforeseen driving scenario. The fifth vehicle T5 of Fig. 2, however, exemplified as not fulfilling the selection criteria, does not represent a selected entity 6, and is accordingly deemed redundant.

Moreover, as illustrated in an exemplifying manner in Fig. 3, the scenario reconstruction system 1 is - e.g. by means of a **request communicating unit 106** - adapted and/or configured for communicating to the at least first selected entity 6, **request data 8** prompting the at least first selected entity 6 to provide stored timestamped **sensor data 63** of its surroundings. Thereby, the at least first selected entity 6 is requested to upload recordings 63 it has made - with support from its surrounding detecting sensor(s) - of the at least first selected entity's 6 surroundings. Accordingly, since the at least first entity 6 was identified to support detection of surroundings and which further was deemed to at least during a time period have had the opportunity to potentially having detected and stored surroundings comprising the host vehicle 2 during said time period, the host vehicle 2 - and potentially further the potential other object(s) 4 - may be found in the requested stored timestamped sensor data 63 of the at least first selected entity 6. Thus, said sensor data 63 - e.g. video clips and/or object level data - may be requested for upload to be used as input for reconstruction of the unforeseen driving scenario, including scenarios leading up to - and potentially also following - said unforeseen driving scenario. This insinuates that entities 6 no longer in near vicinity of the host vehicle 2 at the time of the scenario time instance may be requested to provide their sensor data 63, as said sensor data 63 - although not necessarily covering the unexpected driving scenario at the actual scenario instance - nonetheless may be essential in reconstruction of the scenario. Furthermore, since only entities 6 fulfilling the selection criteria were selected, and the rest of the identified entities 5 hence discarded e.g. for being deemed redundant, a request 8 for uploading recorded sensor data 63 is only communicated to entities 6 considered preferred, suitable and/or good witness candidates. Thus, routinely requesting sensor data from all or essentially all surrounding detecting sensors-provided vehicles in vicinity of the host vehicle 2 at the moment of - or around - the scenario time instance, as known in the art, which may translate into great amounts of and/or redundant sensor data being requested to be uploaded, may accordingly be avoided. Consequently, requesting uploading of potentially unnecessarily large sensor data quantities which in turn may lead to unnecessary data processing and/or data congestion, e.g. in the cloud server 111, may subsequently likewise be avoided. Accordingly, with the introduced concept as described herein of selectively choosing which identified entities 5 to request sensor data from and which to discard, input to scenario reconstruction is hence requested in an adequate and/or efficient manner.

In exemplifying Fig. 1, request data 8 is transmitted to the third vehicle T3 -which is exemplified to represent a selected entity 6 - prompting said third vehicle T3 to provide stored timestamped sensor data 63. Said requested sensor data 63 is here exemplified to have captured the other object(s) 4 - here exemplified by the first vehicle T1 - involved in the unforeseen driving scenario - here collision - which may be valuable input for scenario reconstruction, not the least since the first vehicle T1 here during at least a period of time was obstructed by the second vehicle T2 from being detected by the host vehicle 2.

In exemplifying Fig. 2, on the other hand, request data 8 is transmitted to the first vehicle T1, the piece of infrastructure T6, the third vehicle T3 and the second vehicle T2 - which are exemplified to represent respective selected entities 6 - prompting said entities T1, T6, T3 and T2 to provide respective stored timestamped sensor data 63. Requesting sensor data 63 from merely the second vehicle T2 and the third vehicle T3 - which are exemplified to be in vicinity of the host vehicle 2 at the scenario time instance - is in this example considered not enough for reconstructing a sufficient scenario of the unforeseen driving scenario for analysing and/or identifying reasons behind the collision. Furthermore, in this example, the sensor data 3 of the host vehicle 2 effective shortly before the scenario time instance, is similarly considered not sufficient enough due to the obstructing elements 7 - here trees - obstructing the host vehicle's 2 view of the second vehicle T2 here involved in the collision. The sensor data 63 requested from the first vehicle T1 is here exemplified to have captured the host vehicle 2 during a time period prior the scenario time instance, the sensor data 63 from the surveillance camera of the piece of infrastructure T6 here exemplified to have captured the second vehicle T2 at least during a time period, the sensor data 63 requested from the third vehicle T3 exemplified to have captured the host vehicle 2 during a time period covering the scenario time instance, and the sensor data 63 requested from the - in the unforeseen driving scenario involved - second vehicle T2 is here exemplified to have captured the unforeseen driving scenario, all of which may be valuable input for scenario reconstruction.

Communicating request data 8 prompting the at least first selected entity 6 to provide stored timestamped sensor data 63 of its surroundings, may be accomplished in any arbitrary - e.g. known - manner, such as at, from and/or via the cloud server 111 discussed above, and potentially further via one or more other **automotive clouds** 9 in communication with said cloud server 111 and the at least first selected entity 6. Moreover, the request data 8 may be represented by any arbitrary one or more data instructions and/or messages, e.g. wirelessly provided to the at least first selected entity 6, instructing said entity 6 to upload its stored timestamped sensor data 63 of its surroundings. The sensor data 63 of the at least first selected entity's 6 surroundings, on the other hand, may be represented by any arbitrary feasible sensor data of the world around said entity 6, such as having characteristics and/or format similar to - and/or having been stored and/or captured similarly to - the host vehicle sensor data 3 discussed above. Moreover, the requested sensor data 63 format and/or size, and further the time duration of and/or moment in time for which the requested sensor data 63 is effective, may vary between the different selected one or more entities 6

The phrase "communicating [...] to said at least first entity" may comprise "transmitting, submitting and/or delivering [...] to said at least first entity", "communicating directly or indirectly [...] to said at least first entity" and/or "communicating via one or more automotive clouds [...] to said at least first entity", and according to an example further to "communicating at and/or from said cloud server [...] to said at least first entity". The phrase "request data", on the other hand, may refer to "a request message" and/or "instructions", whereas "request data prompting said at least first entity to provide" may refer to "request data instructing and/or requesting said at least first entity to provide" and/or "request data prompting said at least first entity to transmit and/or upload". Moreover, "provide stored timestamped sensor data of its surroundings" may refer to "provide its stored timestamped sensor data of its surroundings", "provide continuously and/or intermittently stored timestamped sensor data of its surroundings captured with support from its one or more surrounding detecting sensors", "provide recorded timestamped sensor data of its surroundings", "provide stored timestamped sensor data of its surroundings at least pertinent and/or effective for one or more of said at least two respective separate timestamps", and according to an example further to "provide stored timestamped sensor data of its surroundings comprising image data, video data, video clips and/or object level data".

Optionally, the scenario reconstruction system 1 may - e.g. by means of an optional **reconstruction unit 107** - be adapted and/or configured for providing a reconstruction of the unforeseen driving scenario, which reconstruction comprises at least a portion of, from the at least first selected entity 6 obtained, timestamped sensor data 63 of the at least first selected entity's 6 surroundings. Thereby, a reconstruction of the unforeseen driving scenario, including scenarios leading up to - and potentially also following - said unforeseen driving scenario, may be put together, for instance for post-analysis e.g. to find the root cause(s) of the unforeseen driving scenario.

The providing of the reconstruction may for instance take place at the cloud server 111 discussed above. Furthermore, the reconstruction may be provided in any feasible - e.g. known - manner, such as by reconstructing, combining and/or concatenating the - from the one or more selected entities' 6 received - respective sensor data, taking into account temporal and geographical aspects and/or characteristics of the sensor data. The reconstruction may further comprise at least a portion of from the host vehicle 2 derived and/or received stored sensor data 3. Moreover, similarly, the reconstruction may further comprise at least a portion of sensor data of surroundings derived and/or received from an entity e.g. piece of infrastructure in vicinity - but not in immediate surroundings - of the host vehicle 2, which .e.g. infrastructure may be provided with at least a first surrounding detecting sensor - such as a surveillance camera arrangement - during a time period having a range and/or viewing angle potentially capturing the host vehicle 2 and/or the potential other object(s) 4. Such a e.g. piece of infrastructure may for instance be identified by means of its geographical position in view of the host vehicle's 2 - and/or the potential other object(s)' 4 - positions.

Potentially, should the reconstruction for instance be deemed insufficient and/or not reaching up to expectations, the step described herein of selecting at least a first entity 6 out of the identified entities 5, may be iterated, with modified selection criteria. Thereby, there may be selected further and/or other entities than those originally selected 6, which in turn may translate into further and/or other entities contributing to the reconstruction of the unforeseen driving scenario.

Further potentially, the reconstruction may subsequently further form basis for identifying for instance challenging and/or problematic driving situation and/or geographical areas.

The phrase "providing a reconstruction" may refer to "providing a reconstructed scene and/or model", "providing a scenario model", "generating, producing, concatenating and/or presenting a reconstruction" and/or "providing a digital and/or virtual reconstruction", and according to an example further to "providing at said cloud server a reconstruction". The phrase "from said at least first selected entity obtained", on the other hand, may refer to "from said at least first selected entity received and/or gathered", whereas "timestamped sensor data of the at least first selected entity's surroundings" may refer to "timestamped sensor data of said at least first selected entity's surroundings captured continuously and/or intermittently with support from said at least first entity's one or more surrounding detecting sensors", "timestamped sensor data of said at least first selected entity's surroundings at least pertinent and/or effective for one or more of said at least two respective separate timestamps", and according to an example further to "timestamped sensor data of said at least first selected entity's surroundings comprising image data, video data, video clips and/or object level data".

Further optionally, the providing a reconstruction of the unforeseen driving scenario may comprise - and/or the optional reconstruction unit 107 may be adapted and/or configured for - providing the reconstruction in view of a digital map, which reconstruction then comprises elements, for instance road information, of the digital map. Thereby, the reconstruction may be augmented with map data. The digital map may be represented by any feasible digital map such as a high definition, HD map, and/or an equivalent or successor thereof.

As further shown in Fig. 3, which is a schematic block diagram illustrating an exemplifying scenario reconstruction system 1 according to embodiments of the disclosure, the scenario reconstruction system 1 comprises a data storing unit 101, a scenario detecting unit 102, a data deriving unit 103, an identifying unit 104, a selecting unit 105, a request communicating unit 106 and an optional reconstruction unit 107, all of which already have been described in greater detail above. Furthermore, the embodiments herein for supporting assessment of unforeseen driving scenarios of a host vehicle 2, may be implemented through one or more processors, such as at least a first processor 108 - for instance at least a first central processing unit, CPU - together with computer program code for performing the functions and actions of the embodiments herein. Said program code may also be provided as one or more computer program products, for instance in the form of at least a first data carrier carrying computer program code for performing the embodiments herein when being loaded into the scenario reconstruction system 1. One such carrier may be in the form of at least a first CD ROM disc and/or at least a first hard drive, it is however feasible with other data carriers. The computer program code may furthermore be provided as pure program code on a server and downloaded to the scenario reconstruction system 1. The scenario reconstruction system 1 may further comprise at least a first **memory 109** comprising one or more memory units. The memory 109 may be arranged to be used to store e.g. information, and further to store data, configurations, schedulings, and applications, to perform the methods herein when being executed in the scenario reconstruction system 1. For instance, the computer program code may be implemented in the firmware, stored in FLASH memory 109 of at least a first embedded processor 108, and/or downloaded wirelessly e.g. from an off-board server. Furthermore, the units 101-107, the optional at least first processor 108 and/or the optional at least first memory 109, may be comprised in an arrangement at least partly comprised in one or more **nodes 110** e.g. ECUs of the host vehicle 2 - e.g. in and/or in association with the optional ADAS or ADS system 21 - and/or comprised in one or more cloud servers 111. For instance, the data storing unit 101, the scenario detecting unit 102 and the data deriving unit 103 may be comprised in the host vehicle 2, and the identifying unit 104, the selecting unit 105 and the request communicating unit 106 - and potentially further the optional reconstruction unit 107 - may be comprise in the cloud server(s) 111.

Those skilled in the art will also appreciate that said units 101-107 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in one or more memories such as the at least first memory 109, that when executed by the one or more processors such as the at least first processor 108 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

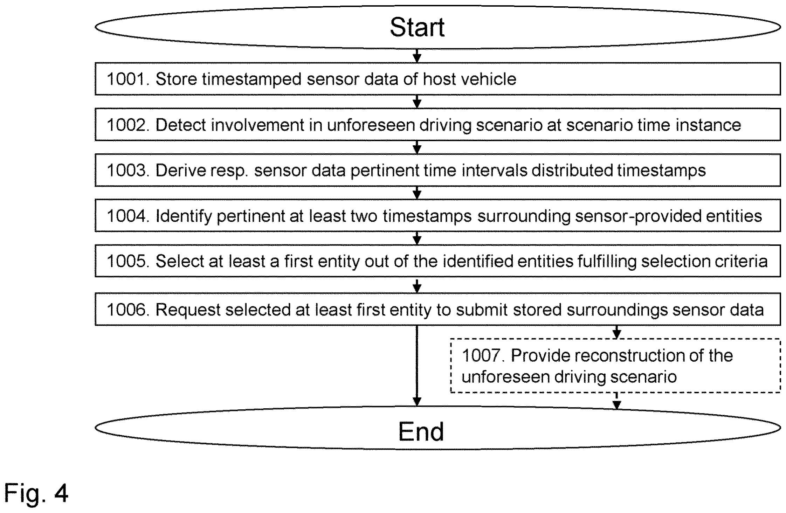

**Fig. 4** is a flowchart depicting an exemplifying method performed by a scenario reconstruction system 1 according to embodiments of the disclosure. Said method is for supporting assessment of unforeseen driving scenarios of a host vehicle 2. The exemplifying method, which may be continuously repeated, comprises one or more of the following actions discussed with support from Figs. 1-3. Moreover, the actions may be taken in any suitable order and/or one or more actions may be performed simultaneously and/or in alternate order where applicable. For instance, Actions 1001 and 1002 may be performed simultaneously.

### Action 1001

In Action 1001, for instance performed at the host vehicle 2, the scenario reconstruction system 1 stores - e.g. with support from the data storing unit 101 - continuously and/or intermittently timestamped sensor data 3 comprising the host vehicle's 2 geographical position and surroundings captured with support from one or more surrounding detecting sensors 22 onboard the host vehicle 2.

### Action 1002

In Action 1002, for instance performed at the host vehicle 2, the scenario reconstruction system 1 detects - e.g. with support from the scenario detecting unit 102 - at a scenario time instance, involvement of the host vehicle 2 in an unforeseen driving scenario, potentially involving one or more other objects 4.

Optionally, Action 1002 of detecting involvement of the host vehicle 2 in an unforeseen driving scenario may comprise detecting, from establishment of accident criteria being fulfilled, involvement of the host vehicle 2 in an unforeseen driving scenario comprising an accident; detecting, from establishment of critical event criteria being fulfilled, involvement of the host vehicle 2 in an unforeseen driving scenario comprising a critical event, for instance a near accident; and/or detecting, from establishment of unforeseen takeover behaviour criteria being fulfilled, involvement of the host vehicle 2 in an unforeseen driving scenario comprising an unforeseen takeover behaviour to or from an ADAS or AD system 21 drive mode.

### Action 1003

In Action 1003, for instance performed at the host vehicle 2, the scenario reconstruction system 1 derives - e.g. with support from the data deriving unit 103 - from the timestamped sensor data 3, subsets 30 of sensor data, e.g. snapshots, pertinent plural separate timestamps prior - and potentially at and/or subsequent - the scenario time instance.

### Action 1004

In Action 1004, for instance performed at the cloud server 111, the scenario reconstruction system 1 identifies - e.g. with support from the identifying unit 104 - one or more surrounding detecting sensors-provided entities 5 respectively present in the subsets 30 pertinent at least two respective separate timestamps.

### Action 1005

In Action 1005, for instance performed at the cloud server 111, the scenario reconstruction system 1 selects - e.g. with support from the selecting unit 105 - at least a first entity 6 out of the identified entities 5, fulfilling selection criteria.

Optionally, Action 1005 of selecting at least a first entity 6 may comprise selecting at least a first entity 6 out of the identified entities 5, fulfilling selection criteria relating to number of and/or time occurrence of timestamps at which the at least first entity 6 is present in the subsets 30; positions of and/or viewing angles from the at least first entity 6 relative positions of the host vehicle 2 in the subsets 30; the at least first entity 6 comprising and/or being comprised in the one or more other objects 4 potentially involved in the unforeseen driving scenario; and/or characteristics of the one or more surrounding detecting sensors of the at least first entity 6.

Moreover, optionally, Action 1005 of selecting at least a first entity 6 may comprise selecting at least a first entity 6 out of the identified entities 5, fulfilling selection criteria to greater extent as compared to other entities of the identified entities 5.

### Action 1006

In Action 1006, for instance performed at the cloud server 111, the scenario reconstruction system 1 communicates - e.g. with support from the request communicating unit 106 - to the at least first selected entity 6, request data 8 prompting the at least first selected entity 6 to provide stored timestamped sensor data 63 of its surroundings.

### Action 1007

In optional Action 1007, for instance performed at the cloud server 111, the scenario reconstruction system 1 may provide - e.g. with support from the optional reconstruction unit 107 - a reconstruction of the unforeseen driving scenario, which reconstruction comprises at least a portion of, from the at least first selected entity 6 obtained, timestamped sensor data 63 of the at least first selected entity's 6 surroundings.

Optionally, Action 1007 of providing a reconstruction of the unforeseen driving scenario may comprise providing the reconstruction in view of a digital map, which reconstruction then comprises elements, for instance road information, of the digital map

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a scenario reconstruction system (1) for supporting assessment of unforeseen driving scenarios of a host vehicle (2), said method comprising:
***storing*** (1001) continuously and/or intermittently timestamped sensor data (3) comprising said host vehicle's (2) geographical position and surroundings captured with support from one or more surrounding detecting sensors (22) onboard said host vehicle (2);
***detecting*** (1002) at a scenario time instance, involvement of said host vehicle (2) in an unforeseen driving scenario;
***deriving*** (1003) from said timestamped sensor data (3), subsets (30) of sensor data, i.e. snapshots, pertinent plural separate timestamps at least prior said scenario time instance;
***identifying*** (1004) one or more surrounding detecting sensors-provided entities (5) respectively present in said subsets (30) pertinent at least two respective separate timestamps;
***selecting*** (1005) at least a first entity (6) out of said identified entities (5), fulfilling selection criteria; and
***communicating*** (1006) to said at least first selected entity (6), request data (8) prompting said at least first selected entity (6) to provide stored timestamped sensor data (63) of its surroundings.

2. The method according to claim 1, wherein said ***selecting*** (1005) comprises selecting at least a first entity (6) out of said identified entities (5), fulfilling selection criteria to greater extent as compared to other entities of said identified entities (5).

3. The method according to claim 1 or 2, wherein said ***selecting*** (1005) comprises selecting at least a first entity (6) out of said identified entities (5), fulfilling selection criteria relating to:
number of and/or time occurrence of timestamps at which said at least first entity (6) is present in said subsets (30);
positions of and/or viewing angles from said at least first entity (6) relative positions of said host vehicle (2) in said subsets (30);
positions of and/or viewing angles from said at least first entity (6) relative positions of one or more other objects (4) involved in said unforeseen driving scenario, in said subsets (30);
said at least first entity (6) comprising and/or being comprised in one or more other objects (4) involved in said unforeseen driving scenario; and/or
characteristics of the one or more surrounding detecting sensors of said at least first entity (6).

4. The method according to any one of claims 1-3, wherein said ***detecting*** (1002) involvement of said host vehicle (2) in an unforeseen driving scenario comprises:
detecting, from establishment of accident criteria being fulfilled, involvement of said host vehicle (2) in an unforeseen driving scenario comprising an accident;
detecting, from establishment of critical event criteria being fulfilled, involvement of said host vehicle (2) in an unforeseen driving scenario comprising a critical event; and/or
detecting, from establishment of unforeseen takeover behaviour criteria being fulfilled, involvement of said host vehicle (2) in an unforeseen driving scenario comprising an unforeseen takeover behaviour to or from an advanced driver assistance system, ADAS, or automated driving, AD, system (21) drive mode.

5. The method according to any one of claims 1-4, further comprising:
***providing*** (1007) a reconstruction of said unforeseen driving scenario, said reconstruction comprising at least a portion of, from said at least first selected entity (6) obtained, timestamped sensor data (63) of said at least first selected entity's (6) surroundings.

6. The method according to claim 5, wherein said ***providing*** (1007) a reconstruction of said unforeseen driving scenario comprises providing said reconstruction in view of a digital map, said reconstruction comprising elements of said digital map.

7. A **scenario reconstruction system** (1) for supporting assessment of unforeseen driving scenarios of a host vehicle (2), said scenario reconstruction system (1) comprising:
a **data storing unit** (101) for ***storing*** (1001) continuously and/or intermittently timestamped sensor data (3) comprising said host vehicle's (2) geographical position and surroundings captured with support from one or more surrounding detecting sensors (22) onboard said host vehicle (2);
a **scenario detecting unit** (102) for ***detecting*** (1002) at a scenario time instance, involvement of said host vehicle (2) in an unforeseen driving scenario;
a **data deriving unit** (103) for ***deriving*** (1003) from said timestamped sensor data (3), subsets (30) of sensor data, i.e. snapshots, pertinent plural separate timestamps at least prior said scenario time instance;
an **identifying unit** (104) for ***identifying*** (1004) one or more surrounding detecting sensors-provided entities (5) respectively present in said subsets (30) pertinent at least two respective separate timestamps;
a **selecting unit** (105) for ***selecting*** (1005) at least a first entity (6) out of said identified entities (5), fulfilling selection criteria; and
a **request communicating unit** (106) for ***communicating*** (1006) to said at least first selected entity (6), request data (8) prompting said at least first selected entity (6) to provide stored timestamped sensor data (63) of its surroundings.

8. The scenario reconstruction system (1) according to claim 7, wherein said selecting unit (105) is adapted for selecting at least a first entity (6) out of said identified entities (5), fulfilling selection criteria to greater extent as compared to other entities of said identified entities (5).

9. The scenario reconstruction system (1) according to claim 7 or 8, wherein said selecting unit (105) is adapted for selecting at least a first entity (6) out of said identified entities (5), fulfilling selection criteria relating to:
number of and/or time occurrence of timestamps at which said at least first entity (6) is present in said subsets (30);
positions of and/or viewing angles from said at least first entity (6) relative positions of said host vehicle (2) in said subsets (30);
positions of and/or viewing angles from said at least first entity (6) relative positions of one or more other objects (4) involved in said unforeseen driving scenario, in said subsets (30);
said at least first entity (6) comprising and/or being comprised in one or more other objects (4) involved in said unforeseen driving scenario; and/or
characteristics of the one or more surrounding detecting sensors of said at least first entity (6).

10. The scenario reconstruction system (1) according to any one of claims 7-9, wherein said scenario detecting unit (102) is adapted for:
detecting, from establishment of accident criteria being fulfilled, involvement of said host vehicle (2) in an unforeseen driving scenario comprising an accident;
detecting, from establishment of critical event criteria being fulfilled, involvement of said host vehicle (2) in an unforeseen driving scenario comprising a critical event; and/or
detecting, from establishment of unforeseen takeover behaviour criteria being fulfilled, involvement of said host vehicle (2) in an unforeseen driving scenario comprising an unforeseen takeover behaviour to or from an advanced driver assistance system, ADAS, or automated driving, AD, system (21) drive mode.

11. The scenario reconstruction system (1) according to any one of claims 7-10, further comprising:
a **reconstruction unit** (107) for ***providing*** (1007) a reconstruction of said unforeseen driving scenario, said reconstruction comprising at least a portion of, from said at least first selected entity (6) obtained, timestamped sensor data (63) of said at least first selected entity's (6) surroundings.

12. The scenario reconstruction system (1) according to claim 11, wherein said reconstruction unit (107) is adapted for providing said reconstruction in view of a digital map, said reconstruction comprising elements of said digital map.

13. An arrangement comprising a data storing unit (101), a scenario detecting unit (102), data deriving unit (103), an identifying unit (104), a selecting unit (105) and a request communicating unit (106) of a scenario reconstruction system (1) according to any one of claims 7-12.

14. A computer program product comprising a computer program containing computer program code means which, when the program is executed by to a computer or a processor, cause the computer or the processor to execute the of a method according to any of claims 1-6, stored on a computer-readable medium or a carrier wave.

15. A non-volatile computer readable storage medium having stored thereon the computer program product of claim 14.

## Patentansprüche

1. Verfahren, das von einem Szenario-Rekonstruktionssystem (1) durchgeführt wird, um die Bewertung von unvorhergesehenen Fahrszenarien eines Host-Fahrzeugs (2) zu unterstützen, wobei das Verfahren umfasst:
***Speichern*** (1001) von kontinuierlich und/oder intermittierend zeitgestempelten Sensordaten (3), die die geografische Position und die Umgebung des Host-Fahrzeugs (2) umfassen, die mit Unterstützung von einem oder mehreren Umgebungserfassungssensoren (22) an Bord des Host-Fahrzeugs (2) erfasst wurden;
***Erfassen*** (1002) der Beteiligung des Host-Fahrzeugs (2) an einem unvorhergesehenen Fahrszenario zu einem Szenariozeitpunkt;
***Ableiten*** (1003), aus den zeitgestempelten Sensordaten (3), von Teilmengen (30) von Sensordaten, d.h. Schnappschüssen, die zu mehreren separaten Zeitstempeln zumindest vor dem Szenariozeitpunkt gehören;
***Identifizieren*** (1004) einer oder mehrerer mit Umgebungserfassungssensoren bereitgestellter Einheiten (5), die jeweils in den Teilmengen (30) vorhanden sind, die zu mindestens zwei jeweiligen separaten Zeitstempeln gehören;
***Auswählen*** (1005) mindestens einer ersten Einheit (6) aus den identifizierten Einheiten (5), die die Auswahlkriterien erfüllt; und
***Übermitteln*** (1006) von Anforderungsdaten (8) an die mindestens erste ausgewählte Einheit (6), die die mindestens erste ausgewählte Einheit (6) auffordern, gespeicherte, zeitgestempelte Sensordaten (63) ihrer Umgebung bereitzustellen.

2. Verfahren nach Anspruch 1, wobei das ***Auswählen*** (1005) das Auswählen mindestens einer ersten Einheit (6) aus den identifizierten Einheiten (5) umfasst, die die Auswahlkriterien im Vergleich zu anderen Einheiten der identifizierten Einheiten (5) in größerem Ausmaß erfüllt.

3. Verfahren nach Anspruch 1 oder 2, wobei das ***Auswählen*** (1005) das Auswählen mindestens einer ersten Einheit (6) aus den identifizierten Einheiten (5) umfasst, wobei das Erfüllen von Auswahlkriterien Bezug nimmt auf:
Anzahl und/oder zeitliches Auftreten von Zeitstempeln, zu denen die mindestens erste Einheit (6) in den Teilmengen (30) vorhanden ist;
Positionen und/oder Blickwinkel der mindestens ersten Einheit (6) relativ zu Positionen des Host-Fahrzeugs (2) in den Teilmengen (30);
Positionen und/oder Blickwinkel der mindestens ersten Einheit (6) relativ zu Positionen eines oder mehrerer anderer Objekte (4), die an dem unvorhergesehenen Fahrszenario beteiligt sind, in den Teilmengen (30);
wobei die mindestens erste Einheit (6) ein oder mehrere andere Objekte (4) umfasst und/oder in ihnen enthalten ist, die an dem unvorhergesehenen Fahrszenario beteiligt sind; und/oder
Eigenschaften des einen oder der mehreren Umgebungserfassungssensoren der mindestens ersten Einheit (6).

4. Verfahren nach einem der Ansprüche 1-3, wobei das *Erfassen* (1002) der Beteiligung des Host-Fahrzeugs (2) an einem unvorhergesehenen Fahrszenario umfasst:
Erfassen der Beteiligung des Host-Fahrzeugs (2) an einem unvorhergesehenen Fahrszenario, das einen Unfall umfasst, ausgehend von der Feststellung, dass Unfallkriterien erfüllt sind;
Erfassen der Beteiligung des Host-Fahrzeugs (2) an einem unvorhergesehenen Fahrszenario, das ein kritisches Ereignis umfasst, ausgehend von der Feststellung, dass Kriterien für ein kritisches Ereignis erfüllt sind; und/oder
Erfassen der Beteiligung des Host-Fahrzeugs (2) an einem unvorhergesehenen Fahrszenario, das ein unvorhergesehenes Übernahmeverhalten in den oder aus dem Fahrmodus eines fortschrittlichen Fahrerassistenzsystems, ADAS, oder eines automatisierten Fahrsystems, AD (21), umfasst, ausgehend von der Feststellung, dass Kriterien für ein unvorhergesehenes Übernahmeverhalten erfüllt sind.

5. Verfahren nach einem der Ansprüche 1-4, weiter umfassend:
***Bereitstellen*** (1007) einer Rekonstruktion des unvorhergesehenen Fahrszenarios, wobei die Rekonstruktion mindestens einen Teil der von der mindestens ersten ausgewählten Einheit (6) erhaltenen, zeitgestempelten Sensordaten (63) der Umgebung der mindestens ersten ausgewählten Einheit (6) umfasst.

6. Verfahren nach Anspruch 5, wobei das ***Bereitstellen*** (1007) einer Rekonstruktion des unvorhergesehenen Fahrszenarios das Bereitstellen der Rekonstruktion im Hinblick auf eine digitale Karte umfasst, wobei die Rekonstruktion Elemente der digitalen Karte umfasst.

7. **Szenario-Rekonstruktionssystem** (1) zur Unterstützung der Bewertung von unvorhergesehenen Fahrszenarien eines Host-Fahrzeugs (2), wobei das Szenario-Rekonstruktionssystem (1) umfasst:
eine **Datenspeichereinheit** (101) zum ***Speichern*** (1001) von kontinuierlich und/oder intermittierend zeitgestempelten Sensordaten (3), die die geografische Position des Host-Fahrzeugs (2) und die Umgebung umfassen, die mit Unterstützung von einem oder mehreren Umgebungserfassungssensoren (22) an Bord des Host-Fahrzeugs (2) erfasst wurden;
eine **Szenario-Erfassungseinheit** (102) zum ***Erfassen*** (1002) der Beteiligung des Host-Fahrzeugs (2) an einem unvorhergesehenen Fahrszenario zu einem Szenario-Zeitpunkt;
eine **Datenableitungseinheit** (103), um aus den zeitgestempelten Sensordaten (3) Teilmengen (30) von Sensordaten, d.h. Schnappschüsse, ***abzuleiten*** (1003), die zu mehreren separaten Zeitstempeln zumindest vor dem Szenariozeitpunkt gehören;
eine **Identifizierungseinheit** (104) zum ***Identifizieren*** (1004) einer oder mehrerer mit Umgebungserfassungssensoren bereitgestellter Einheiten (5), die jeweils in den Teilmengen (30) vorhanden sind, die zu mindestens zwei jeweiligen separaten Zeitstempeln gehören;
eine **Auswahleinheit** (105) zum ***Auswählen*** (1005) mindestens einer ersten Einheit (6) aus den identifizierten Einheiten (5), die die Auswahlkriterien erfüllt; und
eine **Anforderungsübermittlungseinheit** (106) zum ***Übermitteln*** (1006) von Anforderungsdaten (8) an die mindestens erste ausgewählte Einheit (6), die die mindestens erste ausgewählte Einheit (6) auffordern, gespeicherte zeitgestempelte Sensordaten (63) ihrer Umgebung bereitzustellen.

8. Szenario-Rekonstruktionssystem (1) nach Anspruch 7, wobei die Auswahleinheit (105) dafür angepasst ist, mindestens eine erste Einheit (6) aus den identifizierten Einheiten (5) auszuwählen, die Auswahlkriterien im Vergleich zu anderen Einheiten der identifizierten Einheiten (5) in größerem Ausmaß erfüllt.

9. Szenario-Rekonstruktionssystem (1) nach Anspruch 7 oder 8, wobei die Auswahleinheit (105) dafür angepasst ist, mindestens eine erste Einheit (6) aus den identifizierten Einheiten (5) auszuwählen, die Auswahlkriterien erfüllt in Bezug auf:
Anzahl und/oder zeitliches Auftreten von Zeitstempeln, zu denen die mindestens erste Einheit (6) in den Teilmengen (30) vorhanden ist;
Positionen und/oder Blickwinkel der mindestens ersten Einheit (6) relativ zu Positionen des Host-Fahrzeugs (2) in den Teilmengen (30);
Positionen und/oder Blickwinkel der mindestens ersten Einheit (6) relativ zu Positionen eines oder mehrerer anderer Objekte (4), die an dem unvorhergesehenen Fahrszenario beteiligt sind, in den Teilmengen (30);
wobei die mindestens erste Einheit (6) ein oder mehrere andere Objekte (4) umfasst und/oder in ihnen enthalten ist, die an dem unvorhergesehenen Fahrszenario beteiligt sind; und/oder
Eigenschaften des einen oder der mehreren Umgebungserfassungssensoren der mindestens ersten Einheit (6).

10. Szenario-Rekonstruktionssystem (1) nach einem der Ansprüche 7-9, wobei die Szenario-Erfassungseinheit (102) angepasst ist zum:
Erfassen der Beteiligung des Host-Fahrzeugs (2) an einem unvorhergesehenen Fahrszenario, das einen Unfall umfasst, ausgehend von der Feststellung, dass Unfallkriterien erfüllt sind;
Erfassen der Beteiligung des Host-Fahrzeugs (2) an einem unvorhergesehenen Fahrszenario, das ein kritisches Ereignis umfasst, ausgehend von der Feststellung, dass Kriterien für ein kritisches Ereignis erfüllt sind; und/oder
Erfassen der Beteiligung des Host-Fahrzeugs (2) an einem unvorhergesehenen Fahrszenario, das ein unvorhergesehenes Übernahmeverhalten in den oder aus dem Fahrmodus eines fortschrittlichen Fahrerassistenzsystems, ADAS, oder eines automatisierten Fahrsystems, AD (21), umfasst, ausgehend von der Feststellung, dass Kriterien für ein unvorhergesehenes Übernahmeverhalten erfüllt sind.

11. Szenario-Rekonstruktionssystem (1) nach einem der Ansprüche 7-10, weiter umfassend:
eine **Rekonstruktionseinheit** (107) zum ***Bereitstellen*** (1007) einer Rekonstruktion des unvorhergesehenen Fahrszenarios, wobei die Rekonstruktion mindestens einen Teil der von der mindestens ersten ausgewählten Einheit (6) erhaltenen, zeitgestempelten Sensordaten (63) der Umgebung der mindestens ersten ausgewählten Einheit (6) umfasst.

12. Szenario-Rekonstruktionssystem (1) nach Anspruch 11, wobei die Rekonstruktionseinheit (107) dafür angepasst ist, die Rekonstruktion im Hinblick auf eine digitale Karte bereitzustellen, wobei die Rekonstruktion Elemente der digitalen Karte umfasst.

13. Anordnung, umfassend eine Datenspeichereinheit (101), eine Szenario-Erfassungseinheit (102), eine Datenableitungseinheit (103), eine Identifizierungseinheit (104), eine Auswahleinheit (105) und eine Anforderungsübermittlungseinheit (106) eines Szenario-Rekonstruktionssystems (1) nach einem der Ansprüche 7-12.

14. Computerprogrammprodukt, umfassend ein Computerprogramm, das Computerprogrammcodemittel enthält, die, wenn das Programm von einem Computer oder einem Prozessor ausgeführt wird, den Computer oder den Prozessor veranlassen, die Schritte eines Verfahrens nach einem der Ansprüche 1-6 auszuführen, die auf einem computerlesbaren Medium oder einer Trägerwelle gespeichert sind.

15. Nichtflüchtiges computerlesbares Speichermedium, auf dem das Computerprogrammprodukt nach Anspruch 14 gespeichert ist.

## Revendications

1. Procédé mis en oeuvre par un système (1) de reconstruction de scénarios pour assister une évaluation de scénarios de conduite imprévus d'un véhicule hôte (2), ledit procédé comprenant :
***le stockage*** (1001) continu et/ou intermittent de données (3) de capteur horodatées comprenant une position géographique et un environnement dudit véhicule hôte (2) capturées avec l'aide d'un ou plusieurs capteurs (22) de détection d'environnement à bord dudit véhicule hôte (2) ;
***la détection*** (1002) à une instance temporelle de scénario, d'une implication dudit véhicule hôte (2) dans un scénario de conduite imprévu ;
***la déduction*** (1003) à partir desdites données (3) de capteur horodatées, de sous-ensembles (30) de données de capteur, c'est-à-dire d'instantanés, pertinents pour plusieurs horodatages distincts au moins avant ladite instance temporelle de scénario ;
***l'identification*** (1004) d'une ou plusieurs entités (5) fournies par des capteurs de détection d'environnement respectivement présentes dans lesdits sous-ensembles (30) pertinents pour au moins deux horodatages distincts respectifs ;
***la sélection*** (1005) d'au moins une première entité (6) parmi lesdites entités (5) identifiées, répondant à des critères de sélection ; et
***la communication*** (1006) à ladite au moins une première entité (6) sélectionnée, de données de demande (8) invitant ladite au moins première entité (6) sélectionnée à fournir des données de capteur horodatées stockées (63) de son environnement.

2. Procédé selon la revendication 1, dans lequel ladite ***sélection*** (1005) comprend la sélection d'au moins une première entité (6) parmi lesdites entités (5) identifiées, répondant à des critères de sélection dans une plus grande mesure par rapport à d'autres entités parmi lesdites entités (5) identifiées.

3. Procédé selon la revendication 1 ou la revendication 2, dans lequel ladite ***sélection*** (1005) comprend la sélection d'au moins une première entité (6) parmi lesdites entités (5) identifiées, remplissant des critères de sélection relatifs à :
un nombre et/ou une heure de survenue des horodatages auxquels ladite au moins première entité (6) est présente dans lesdits sous-ensembles (30) ;
des positions et/ou des angles de vue de ladite au moins première entité (6) par rapport à des positions dudit véhicule hôte (2) dans lesdits sous-ensembles (30) ;
des positions et/ou des angles de vue de ladite au moins première entité (6) par rapport à des positions d'un ou plusieurs autres objets (4) impliqués dans ledit scénario de conduite imprévu, dans lesdits sous-ensembles (30) ;
ladite au moins première entité (6) comprenant un ou plusieurs autres objets (4) impliqués dans ledit scénario de conduite imprévu et/ou étant comprise dans ceux-ci ; et/ou
des caractéristiques des un ou plusieurs capteurs de détection d'environnement de ladite au moins première entité (6).

4. Procédé selon l'une quelconque des revendications 1 à 3, dans lequel ladite ***détection*** (1002) d'une implication dudit véhicule hôte (2) dans un scénario de conduite imprévu comprend :
la détection, d'après la détermination du fait que des critères d'accident sont satisfaits, de l'implication dudit véhicule hôte (2) dans un scénario de conduite imprévu comprenant un accident ;
la détection, d'après la détermination du fait que des critères d'évènement critique sont satisfaits, de l'implication dudit véhicule hôte (2) dans un scénario de conduite imprévu comprenant un évènement critique ; et/ou
la détection, d'après la détermination du fait que des critères de comportement de prise en charge imprévue sont satisfaits, de l'implication dudit véhicule hôte (2) dans un scénario de conduite imprévu comprenant un comportement de prise en charge imprévue vers ou depuis un mode de conduite de système avancé d'aide à la conduite (ADAS) ou de système (21) de conduite automatisée (AD).

5. Procédé selon l'une quelconque des revendications 1 à 4, comprenant en outre :
***la fourniture*** (1007) d'une reconstruction dudit scénario de conduite imprévu, ladite reconstruction comprenant au moins une partie, provenant de ladite au moins première entité (6) sélectionnée obtenue, des données de capteur horodatées (63) de l'environnement de ladite au moins première (6) entité sélectionnée.

6. Procédé selon la revendication 5, dans lequel ladite ***fourniture*** (1007) d'une reconstruction dudit scénario de conduite imprévu comprend la fourniture de ladite reconstruction en vue d'une carte numérique, ladite reconstruction comprenant des éléments de ladite carte numérique.

7. **Système (1) de reconstruction de scénarios** pour assister une évaluation de scénarios de conduite imprévus d'un véhicule hôte (2), ledit système (1) de reconstruction de scénarios comprenant :
une **unité de stockage de données** (101) pour le ***stockage*** (1001) continu et/ou intermittent de données (3) de capteur horodatées comprenant une position géographique et un environnement dudit véhicule hôte (2) capturées avec l'aide d'un ou plusieurs capteurs (22) de détection d'environnement à bord dudit véhicule hôte (2) ;
une **unité de détection de scénarios** (102) pour la ***détection*** (1002) à une instance temporelle de scénario, d'une implication dudit véhicule hôte (2) dans un scénario de conduite imprévu ;
une **unité de déduction de données** (103) pour la ***déduction*** (1003) à partir desdites données (3) de capteur horodatées, de sous-ensembles (30) de données de capteur, c'est-à-dire d'instantanés, pertinents pour plusieurs horodatages distincts au moins avant ladite instance temporelle de scénario ;
une **unité d'identification** (104) pour ***l'identification*** (1004) d'une ou plusieurs entités (5) fournies par des capteurs de détection d'environnement respectivement présentes dans lesdits sous-ensembles (30) pertinents pour au moins deux horodatages distincts respectifs ;
une **unité de sélection** (105) pour la ***sélection*** (1005) d'au moins une première entité (6) parmi lesdites entités (5) identifiées, répondant à des critères de sélection ; et
une **unité de communication de demande** (106) pour la ***communication*** (1006) à ladite au moins première entité (6) sélectionnée, de données de demande (8) invitant ladite au moins première entité (6) sélectionnée à fournir des données de capteur horodatées stockées (63) de son environnement.

8. Système (1) de reconstruction de scénarios selon la revendication 7, dans lequel ladite unité de sélection (105) est adaptée pour sélectionner au moins une première entité (6) parmi lesdites entités (5) identifiées, répondant à des critères de sélection dans une plus grande mesure par rapport à d'autres entités parmi lesdites entités (5) identifiées.

9. Système (1) de reconstruction de scénarios selon la revendication 7 ou la revendication 8, dans lequel ladite unité de sélection (105) est adaptée pour sélectionner au moins une première entité (6) parmi lesdites entités (5) identifiées, remplissant des critères de sélection relatifs à :
un nombre et/ou une heure de survenue des horodatages auxquels ladite au moins première entité (6) est présente dans lesdits sous-ensembles (30) ;
des positions et/ou des angles de vue de ladite au moins première entité (6) par rapport à des positions dudit véhicule hôte (2) dans lesdits sous-ensembles (30) ;
des positions et/ou des angles de vue de ladite au moins première entité (6) par rapport à des positions d'un ou plusieurs autres objets (4) impliqués dans ledit scénario de conduite imprévu, dans lesdits sous-ensembles (30) ;
ladite au moins première entité (6) comprenant un ou plusieurs autres objets (4) impliqués dans ledit scénario de conduite imprévu et/ou étant comprise dans ceux-ci ; et/ou
des caractéristiques des un ou plusieurs capteurs de détection d'environnement de ladite au moins première entité (6).

10. Système (1) de reconstruction de scénarios selon l'une quelconque des revendications 7 à 9, dans lequel ladite unité de détection de scénarios (102) est adaptée pour :
la détection, d'après la détermination du fait que des critères d'accident sont satisfaits, de l'implication dudit véhicule hôte (2) dans un scénario de conduite imprévu comprenant un accident ;
la détection, d'après la détermination du fait que des critères d'évènement critique sont satisfaits, de l'implication dudit véhicule hôte (2) dans un scénario de conduite imprévu comprenant un évènement critique ; et/ou
la détection, d'après la détermination du fait que des critères de comportement de prise en charge imprévue sont satisfaits, de l'implication dudit véhicule hôte (2) dans un scénario de conduite imprévu comprenant un comportement de prise en charge imprévue vers ou depuis un mode de conduite de système avancé d'aide à la conduite (ADAS) ou de système (21) de conduite automatisée (AD).

11. Système (1) de reconstruction de scénarios selon l'une quelconque des revendications 7 à 10, comprenant en outre :
une **unité de reconstruction** (107) pour la ***fourniture*** (1007) d'une reconstruction dudit scénario de conduite imprévu, ladite reconstruction comprenant au moins une partie, provenant de ladite au moins première entité (6) sélectionnée obtenue, des données de capteur horodatées (63) de l'environnement de ladite au moins première entité (6) sélectionnée.

12. Système (1) de reconstruction de scénarios selon la revendication 11, dans lequel ladite unité de reconstruction (107) est adaptée pour fournir ladite reconstruction en vue d'une carte numérique, ladite reconstruction comprenant des éléments de ladite carte numérique.

13. Agencement comprenant une unité de stockage de données (101), une unité de détection de scénarios (102), une unité de déduction de données (103), une unité d'identification (104), une unité de sélection (105) et une unité de communication de demande (106) d'un système (1) de reconstruction de scénarios selon l'une quelconque des revendications 7 à 12.

14. Produit de programme informatique comprenant un programme informatique contenant des moyens de code de programme informatique qui, lorsque le programme est exécuté par un ordinateur ou un processeur, amènent l'ordinateur ou le processeur à exécuter les étapes du procédé selon l'une quelconque des revendications 1 à 6, stocké sur un support lisible par ordinateur ou une onde porteuse.

15. Support de stockage lisible par ordinateur non volatile sur lequel est stocké le produit de programme informatique selon la revendication 14.
